# EUROPEAN PATENT APPLICATION

(11) **EP 2 136 455 A1**
(43) Date of publication of application: **23.12.2009**
(21) Application number: 08158573.9
(22) Date of filing: 19.06.2008
(51) Int. Cl.: H02K 3/24, H02K 1/16, H02K 9/10, H02K 9/18, H02K 9/19, H02K 9/22

(54) **An electric motor provided with a cooling arrangement**

(71) Applicant: ABB Research Ltd., 8050 Zürich (CH)
(72) Inventor: Sadarangani, Chandur, 115 57 Stockholm (SE); Chin, Robert, 723 44 Västerås (SE); Magnussen, Freddy, 723 48 Västerås (SE)
(74) Representative: Dahlstrand, Björn

(57) **Abstract**

According to the invention is described an electric motor comprising a rotor, a stator (1) having a plurality of stator teeth (4) having a rectangular cross section, concentrated windings comprising stator winding coils (6) wound on the periphery of the stator teeth, and a stator slot (8) formed between two adjacent stator teeth. The motor further comprises winding coils (6) comprising a winding of a conductor having a rectangular cross section, whereby an unoccupied space (10) is created in the stator slot (8) between the windings (6) of adjacent teeth (4), and comprises a cooling arrangement (12; 14; 16; 18, 20) in the unoccupied space (10) of the stator slot (8).

## Description

### Technical field of the invention

The invention relates to an electric motor provided with a cooling arrangement. In particular it relates to a permanent magnet (PM) motor having rectangular stator teeth and a concentrated winding.

### Background of the invention

Permanent magnet torque motors are designed for high torque and low speed applications, such as gearless direct drive systems. Due to low speed operation, a high pole number for the motor is possible, while still maintaining a moderate synchronous frequency. The high pole number results in a compact motor because the required yoke thickness becomes thin, the air gap diameter becomes large, and consequently the torque will be high. In order to further increase the torque output, it is known to use concentrated windings in the stator instead of the traditional distributed windings in which the different phases are crossing each other at the end-winding region. The concentrated windings are designed as one coil around one tooth, i.e. tooth coils, which enables very short end-windings and a high fill factor of copper in the stator slot area. The material need is therefore reduced and the heat transfer capability is increased.

Generally, when a high torque is obtained, the requirement for cooling is increased.

For cost effective manufacturing reasons, the coils need to be assembled onto the main teeth from the air gap side, i.e. from inside the stator. The main teeth should therefore have rectangular shapes.

### Summary of the invention

The object of the present invention is to provide an electric motor that is suitable for high torque and low speed applications, while taking into consideration other requirements as indicated above.

According to the present invention is defined an electric motor comprising a rotor, a stator having a plurality of stator teeth having a rectangular cross section, concentrated windings comprising stator winding coils wound on the periphery of the stator teeth, and a stator slot formed between two adjacent stator teeth, characterized in the winding coils comprising a winding of a conductor having a rectangular cross section, whereby an unoccupied space is created in the stator slot between the windings of adjacent teeth, and comprising a cooling arrangement in the unoccupied space of the stator slot.

Through this invention, a high fill factor can be achieved when rectangular conductors are used as winding in the slots. This also provides for improved cooling since high fill factor due to no empty space between the rectangular conductors will result in lower losses and improved thermo-conductivity. In addition, to provide for cooling in the stator slot offers increased efficiency as compared to the traditional cooling along the yoke or in the housing of the stator, since the hottest spot would be at the end of the winding which would be more efficiently cooled by a cooling arrangement provided in the slot. To summarize, the inventive concept enables efficient cooling of the conductors of the winding, the yoke and the iron core in the stator, resulting in enhanced rated output torque.

According to a further feature, a winding coil of a tooth has an equal number of winding layers along the tooth, thereby forming a rectangular coil. In combination with a rectangular tooth, this will result in that the unoccupied space created in the stator slot will have a trapezoidal cross section, as defined according to another feature.

According to one embodiment, the cooling arrangement may comprise means for forced circulation of a cooling fluid in the unoccupied space of the stator slot.

According to another embodiment, the cooling arrangement may comprise tubes installed in the unoccupied space of the slot, and that a cooling fluid is circulated in the tubes.

According to a further embodiment, the cooling arrangement may comprise intermediate teeth installed in the unoccupied space of the slots.

In one alternative, the intermediate teeth may be solid and of a material having high heat conductivity. A solid tooth of for example iron, will in itself contribute to improved cooling due to its capability to dissipate heat.

In another alternative, the intermediate teeth may be provided with cooling ducts through which a cooling fluid is circulated.

As a further feature, the intermediate teeth may be designed for mechanical support of the winding coils. Through this, a stabilizing effect on the winding coils is obtained and vibrations are reduced which will increase the life expectancy of the motor.

Finally, the intermediate teeth may be trapezoidal in cross section.

By having intermediate teeth, the normal case being one intermediate tooth in each stator slot, it is also possible to achieve improved separation of the winding coils and the risks for possible short circuit currents are reduced. This is an advantage since the neighbouring windings can be of different phases.

Further features and advantages of the present invention will become apparent from the following detailed description of the invention.

### Brief description of the drawings

The present invention will now be described with reference to the accompanying figures, illustrating an example of an embodiment, and in which:
Fig. 1 schematically illustrates a first embodiment of a cooling arrangement in an electric motor according to the present invention,
Fig. 2 schematically illustrates a second embodiment of a cooling arrangement in an electric motor according to the present invention,
Fig. 3 schematically illustrates a third embodiment of a cooling arrangement in an electric motor according to the present invention, and
Fig. 4 schematically illustrates a fourth embodiment of a cooling arrangement in an electric motor according to the present invention.

### Detailed description of the invention

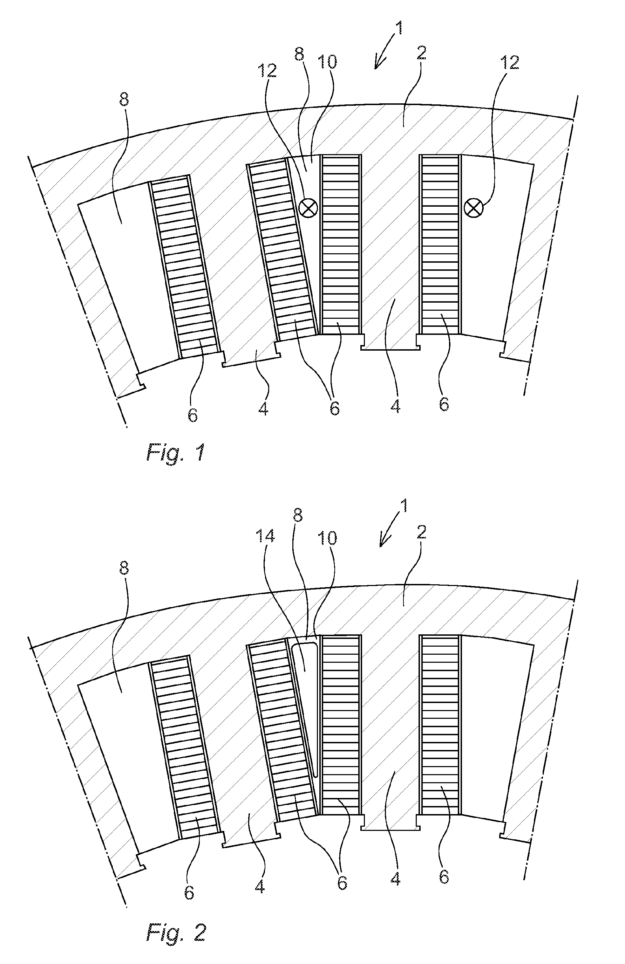

In Fig. 1 is schematically illustrated a coil span and core structure of a PM torque motor. The stator core 1 comprises a yoke 2, rectangular stator teeth 4, and a concentrated winding comprising stator coils 6 wound on the periphery of the stator teeth. In the illustrated example, each stator tooth has one coil, i.e. so called tooth coils, forming a so called double layer winding. However, the inventive cooling concept could also be applied to a single layer winding having a coil on every second tooth. The winding is made of a rectangular conductor, e.g. copper wire. Between two adjacent stator teeth 4 is formed a stator slot 8, which is partly occupied by the winding coils 6 of the two adjacent teeth.

The teeth 4 have a rectangular shape, and since the winding coil 6 of the rectangular conductor has an equal number of windings layers, one or more layers, along the periphery of the individual tooth the winding coils will have a rectangular shape. As a consequence, the winding coils will only partly fill the stator slot, as seen in Fig. 1. Between two adjacent winding coils there will remain an unoccupied space 10 in the stator slot which will have a trapezoidal shape. In the illustrated first embodiment of Fig. 1, this trapezoidal unoccupied space is left open and a cooling fluid is circulated in this unoccupied space 10. This is schematically illustrated by the arrows 12. This can be achieved, for example, by letting forced air flow through the motor. Both internal or closed cooling and external cooling are possible, e.g. using a heat exchanger.

A second embodiment of the invention is schematically shown in Fig. 2. In this figure and the following figures, the same reference numerals as in Fig. 1 will be used for the same or corresponding elements. In this embodiment, tubes 14 for a cooling fluid are installed in the unoccupied space 10. The tubes will be connected to a cooling system, e.g. including a heat exchanger. The fluid, in most cases a liquid, is forced to circulate in the tubes. The tubes would be in close contact with the winding coils.

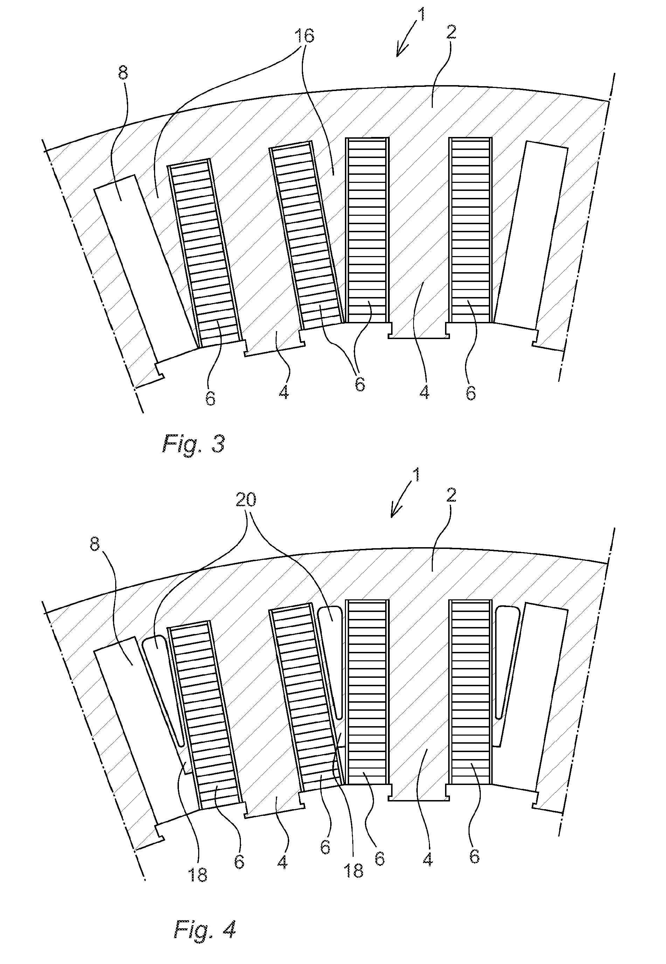

According to a third embodiment of the present invention, illustrated schematically in Fig. 3, an intermediate tooth 16 is installed in the unoccupied space 10 of the stator slot 8, between two adjacent teeth 4 and their respective winding coils 6. Corresponding intermediate teeth are planned to be installed in all of the stator slots. Preferably, the respective intermediate teeth 16 have a trapezoidal shape in order to fill the unoccupied space. The intermediate teeth are solid in order to improve the heat conductivity and promote cooling of the windings and the stator core. They may be of iron or some other material displaying high heat conductivity, but they are not electromagnetically active, or at least this is negligible. The intermediate teeth 16 may be made in one piece with the yoke, but other constructions are not excluded.

In a fourth embodiment, schematically shown in Fig. 4, the intermediate tooth is provided with a cooling duct 20 inside the tooth. Through this cooling duct, a cooling medium is circulated. For example it may be forced air cooling or liquid cooling, with connection to a cooling system, internal or external, including, for example, a heat exchanger.

The intermediate teeth in Figs. 3 and 4 may also have an additional function as mechanical supports for the winding coils to prevent unfavourable vibrations for example, as well as separating the coils and thereby increasing the fault tolerance of the winding system.

By the word trapezoidal is here meant having the geometric shape of a trapezoid, i.e. a quadrilateral having only one pair of parallel sides.

The present invention is suitable for a non-segmented or non-separated core, but not limited thereto.

The present invention is not limited to the described embodiments, given as examples only, but may be varied and modified in many ways within the scope of the appended patent claims, as will be realized by a person skilled in the art.

## Claims

1. An electric motor comprising
- a rotor,
- a stator (1) having a plurality of stator teeth (4) having a rectangular cross section,
- concentrated windings comprising stator winding coils (6) wound on the periphery of the stator teeth, and
- a stator slot (8) formed between two adjacent stator teeth,
**characterized in** the winding coils (6) comprising a winding of a conductor having a rectangular cross section, whereby an unoccupied space (10) is created in the stator slot (8) between the windings (6) of adjacent teeth (4), and comprising a cooling arrangement (12; 14; 16; 18, 20) in the unoccupied space (10) of the stator slot (8).

2. An electric motor according to claim 1, **characterized in that** the winding coil (6) of a tooth (4) has an equal number of winding layers along the tooth, thereby forming a rectangular coil.

3. An electric motor according to any one of claims 1-2, **characterized in that** the unoccupied space (10) created in the stator slot (8) has a trapezoidal cross section.

4. An electric motor according to any one of claims 1-3, **characterized in that** the cooling arrangement (12) comprises means for forced circulation of a cooling fluid in the unoccupied space (10) of the stator slot (8).

5. An electric motor according to any one of claims 1-3, **characterized in that** the cooling arrangement comprises tubes (14) installed in the unoccupied space (10) of the slot (8), and that a cooling fluid is circulated in the tubes.

6. An electric motor according to any one of claims 1-5, **characterized in that** the cooling arrangement comprises intermediate teeth (16;18) installed in the unoccupied space of the slots.

7. An electric motor according to claim 6, **characterized in that** the intermediate teeth (16) are solid and of a material having a high heat conductivity.

8. An electric motor according to claim 6, **characterized in that** the intermediate teeth (18) are provided with cooling ducts (20) through which a cooling fluid is circulated.

9. An electric motor according to any one of claims 6-8, **characterized in that** the intermediate teeth (16; 18) are designed for mechanical support of the winding coils (6).

10. An electric motor according to any one of claims 6-9, **characterized in that** the intermediate teeth (16; 18) are trapezoidal in cross section.

## Amended claims

### Amended claims in accordance with Rule 137(2) EPC.

**1.** An electric motor comprising
- a rotor,
- a stator (1) having a yoke (2) and a plurality of stator teeth (4), the stator teeth (4) having a rectangular cross section,
- concentrated windings comprising stator winding coils (6) wound on the periphery of the stator teeth, and
- a stator slot (8) formed between two adjacent stator teeth,
- the winding coils (6) comprising a winding of a conductor having a rectangular cross section, whereby an unoccupied space (10) is created in the stator slot (8) between the windings (6) of adjacent teeth (4), and comprising a cooling arrangement (18, 20) in the unoccupied space (10) of the stator slot (8),
- the cooling arrangement (18, 20) comprising intermediate teeth (18) installed in the unoccupied space of the slots and made in one piece with the yoke (2),
**characterized in that** the intermediate teeth (18) are provided with cooling ducts (20) through which a cooling fluid is circulated.

**2.** An electric motor according to claim 1, **characterized in that** the winding coil (6) of a tooth (4) has an equal number of winding layers along the tooth, thereby forming a rectangular coil.

**3.** An electric motor according to any one of claims 1-2, **characterized in that** the intermediate teeth (16; 18) are designed for mechanical support of the winding coils (6).

**4.** An electric motor according to any one of claims1-3, **characterized in that** the intermediate teeth (16; 18) are trapezoidal in cross section.
